(19) **Europäisches Patentamt European Patent Office Office européen des brevets**

(11) **EP 1 562 034 B1**

(12) **FASCICULE DE BREVET EUROPEEN**

(45) Date de publication et mention
de la délivrance du brevet:
**12.12.2007 Bulletin 2007/50**

(51) Int Cl.:
*G01N 3/32* *(2006.01)* *G01N 19/04* *(2006.01)*
*G01N 29/11* *(2006.01)*

(21) Numéro de dépôt: **05290107.1**

(22) Date de dépôt: **18.01.2005**

(54) **Procédé de mesure de l'adhérence d'un revêtement sur un substrat par couplage acoustique d'un transducteur au moyen d'une couche mince**

Verfahren zur Messung der Haftfestigkeit einer Beschichtung auf einem Substrat durch akustische Ankopplung eines Transducers mittels einer dünnen Schicht

Method for measuring the adhesion of a coating on a substrate by acoustic coupling of a transducer by means of a thin layer

(84) Etats contractants désignés:
**AT BE BG CH CY CZ DE DK EE ES FI FR GB GR HU IE IS IT LI LT LU MC NL PL PT RO SE SI SK TR**

(30) Priorité: **05.02.2004 FR 0401085**

(43) Date de publication de la demande:
**10.08.2005 Bulletin 2005/32**

(73) Titulaire: **SNECMA**
**75015 Paris (FR)**

(72) Inventeur: **Chatellier, Jean-Yves**
**94110 Arcueil (FR)**

(74) Mandataire: **Ramey, Daniel et al**
**Ernest Gutmann - Yves Plasseraud S.A.S.**
**3, rue Auber**
**75009 Paris (FR)**

(56) Documents cités:
**EP-A- 1 130 391** **DE-C- 10 004 212**
**US-A- 6 070 473**

- **DATABASE WPI Section EI, Week 199245 Derwent Publications Ltd., London, GB; Class S03,page 4, AN 1992-372394 XP002299511 KHMELEV V. N.: "Ultrasonic testing of continuity of connection of two materials with differing acoustic resistance - in which beam of ultrasonic vibrations is fixed to obtain maximum on axis of defect and area of peak is fixed at minimum of received vibrations" -& SU 1 698 746 A (KUZNT METAL COMBINE) 15 décembre 1991 (1991-12-15)**
- **PATENT ABSTRACTS OF JAPAN vol. 0124, no. 53 (P-792), 29 novembre 1988 (1988-11-29) -& JP 63 175762 A (HITACHI CONSTR MACH CO LTD), 20 juillet 1988 (1988-07-20)**

## Description

La présente invention concerne un procédé de mesure de l'adhérence d'un revêtement sur un substrat, et en particulier d'un revêtement métallique déposé sur un substrat métallique.

L'adhérence d'un revêtement sur un substrat peut être évaluée au moyen d'éprouvettes constituées de disques de même matériau que le substrat comportant le revêtement sur une de leurs faces. Ces disques sont collés sur des contre-éprouvettes que l'on fixe sur les mors d'une machine d'essai en traction. La mesure de l'adhérence du revêtement est alors fournie par une mesure mécanique de la force nécessaire pour arracher le revêtement du substrat.

Toutefois, on observe des dispersions considérables des forces de rupture mesurées sur des éprouvettes identiques, ce qui montre que le mode opératoire utilisé introduit des incertitudes qui sont si grandes qu'il est difficile d'accorder une valeur à ces essais. Il est probable que le collage est responsable de défauts d'uniformité de transmission de la force de traction à travers l'assemblage, mais on ne peut y remédier même en prenant le plus grand soin en le réalisant.

De plus, avec certains revêtements du type carbure de tungstène qui présentent une adhérence supérieure à celle de la colle utilisée, on mesure par ces essais la résistance à la rupture de la colle et non celle du revêtement.

Dans le brevet EP 1 130 391 de la demanderesse, on a décrit un procédé de mesure de l'adhérence d'un revêtement sur un substrat grâce à des ondes ultrasonores, ce procédé utilisant un transducteur qui est éloigné de l'échantillon à mesurer et qui est immergé avec l'échantillon dans une cuve remplie d'eau.

Ce procédé connu ne peut être appliqué qu'à des éprouvettes car il est en général impossible d'immerger une pièce réelle massive dans une cuve remplie d'eau. Il ne peut pas non plus être appliqué à des revêtements poreux qui absorbent l'eau de la cuve par capillarité, ce qui rend la mesure inefficace.

De plus, il faut dans ce procédé connu que le transducteur soit orienté perpendiculairement à l'éprouvette à mesurer, tout défaut d'orthogonalité provoquant des dispersions d'ondes dans l'eau et faussant les mesures.

Un but de la présente invention est de pallier ces inconvénients, grâce à un procédé permettant notamment une évaluation in situ de l'adhérence d'un revêtement d'un substrat ou d'une pièce quelconque, au moyen d'ondes ultrasonores.

Ce but est atteint au moyen d'un procédé de mesure de l'adhérence d'un revêtement sur un substrat, consistant à émettre des ultrasons au moyen d'un transducteur en direction du substrat et du revêtement, à capter une succession d'échos résultant de réflexions des ultrasons sur les faces du substrat et du revêtement, et à calculer un rapport d'amplitude de deux échos successifs, caractérisé en ce que la mesure est faite dans l'air et en ce que le procédé consiste également à appliquer le transducteur sur le substrat au moyen d'une couche mince de gel, à calculer un facteur de qualité du revêtement donné par le rapport entre les amplitudes des échos associés aux deux premières réflexions sur l'interface substrat - revêtement après traversée du substrat ou sur l'interface revêtement - air après traversée du substrat et du revêtement, et à déterminer l'adhérence du revêtement à partir d'une fonction de corrélation entre le facteur de qualité et la contrainte à la rupture du revêtement, obtenue préalablement par des essais mécaniques sur des éprouvettes d'étalonnage.

Le procédé selon l'invention est applicable à tout type de pièces et de revêtement. En particulier, il permet des mesures in situ sur des pièces revêtues quelconques et sur des revêtements poreux.

Lorsque l'impédance acoustique du substrat est grande devant celle du revêtement, l'onde ultrasonore est réfléchie par l'interface substrat - revêtement. Lorsque les impédances acoustiques du substrat et du revêtement sont voisines, l'onde ultrasonore traverse cette interface et le revêtement et est réfléchie par l'interface revêtement-air.

Le procédé selon l'invention permet de répéter les mesures in situ à des intervalles de temps réguliers ou non pour suivre l'évolution de la qualité de l'adhérence du revêtement sur une pièce dans le temps.

Un autre avantage du procédé selon l'invention est la détermination de la qualité de la liaison substrat - revêtement et de la qualité de la structure du revêtement.

De manière générale, un avantage majeur de la présente invention est de permettre des mesures rapides in situ sur des pièces comportant un revêtement, sans démontage et sans immersion de ces pièces.

D'autres avantages et caractéristiques de l'invention apparaîtront à la lecture de la description suivante faite à titre d'exemple non limitatif et en référence aux dessins annexés dans lesquels :

- la figure 1 est une vue schématique de l'appareillage utilisé pour l'exécution du procédé selon l'invention ;
- la figure 2 est une vue schématique de l'appareillage utilisé selon une variante de réalisation de l'invention ;
- les figures 3 et 4 sont des vues schématiques illustrant deux modes de réflexion des ultrasons ;
- la figure 5 représente une courbe d'échos obtenue par le procédé ;
- la figure 6 est une vue schématique illustrant un essai mécanique de rupture ;
- la figure 7 représente une courbe de corrélation entre la contrainte à la rupture et le facteur de qualité.

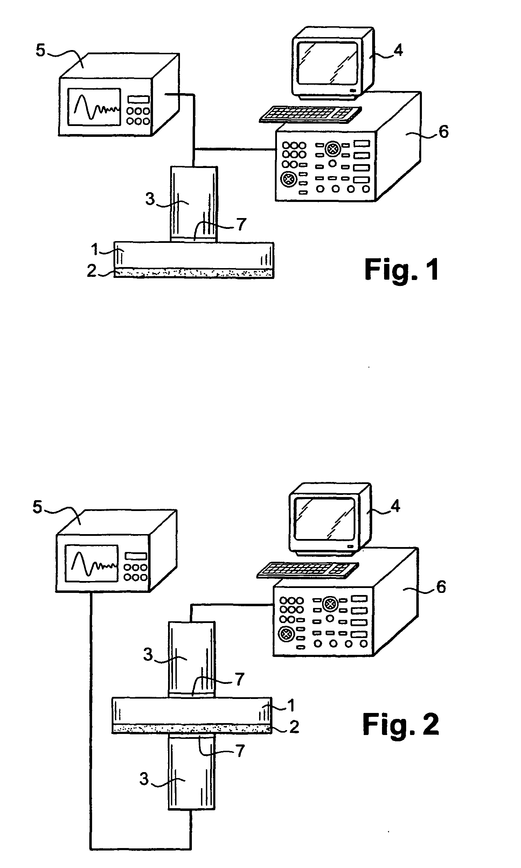

En figure 1, la référence 1 désigne un substrat, formé par un matériau quelconque, et la référence 2 désigne un revêtement déposé sur ce substrat. Typiquement le substrat et le revêtement sont métalliques

Le revêtement 2 a été réalisé par un procédé tel que la projection au plasma pour lequel les mesures de l'adhérence ont une grande importance en raison de l'irrégularité de structure du revêtement 2 et donc de sa fragilité. Le revêtement 2 présente une épaisseur beaucoup plus faible que celle du substrat 1.

Un transducteur 3 générant une onde ultrasonore longitudinale, est appliqué sur le substrat du côté opposé au revêtement 2. Le transducteur 3 est relié à un moyen de commande 4, tel qu'un microordinateur, à un oscilloscope 5 et à un générateur d'impulsions 6.

Pour améliorer le contact entre le transducteur et la surface sur laquelle il est appliqué, une couche mince 7 de gel est placée entre eux, et a une épaisseur d'environ 10$\mu$m.

Le transducteur 3 émet une onde ultrasonore longitudinale et fonctionne aussi comme récepteur. L'oscilloscope 5 enregistre et affiche les échos captés par le transducteur 3 et permet de les exploiter de la façon décrite ci-après.

La figure 2 illustre une variante de réalisation de l'appareillage, dans lequel deux transducteurs 3, 3' sont utilisés. Le premier transducteur 3 est disposé de la même manière que décrit précédemment et a pour fonction d'émettre des ondes ultrasonores alors que le deuxième transducteur 3', en contact avec la surface inférieure libre du revêtement 2, fonctionne en récepteur, le premier transducteur 3 étant relié au moyen de commande 4 et au générateur d'impulsions 6, le second transducteur 3' étant relié à l'oscilloscope 5.

Dans cette variante, la mesure est réalisée non sur les réflexions de l'onde ultrasonore, mais sur les transmissions à travers le revêtement 2.

Quand les impédances acoustiques du substrat 1 et du revêtement 2 sont notablement différentes, l'onde ultrasonore émise par le transducteur 3 est réfléchie à l'interface substrat 1 - revêtement 2, alors que dans le cas contraire, si les impédances acoustiques sont voisines, l'onde ultrasonore émise par le transducteur 3 traverse le revêtement 2 et est réfléchie à l'interface revêtement 2 - air.

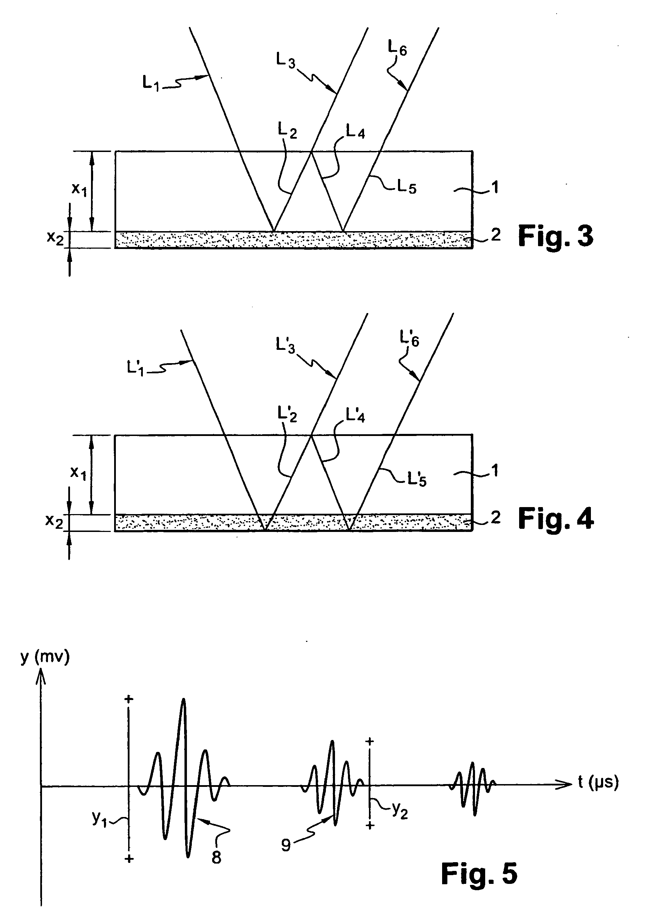

Les figures 3 et 4 illustrent les modes correspondants de réflexion des ondes ultrasonores par les interfaces précitées, la direction de l'onde étant représentée en oblique pour plus de clarté. Les ondes ultrasonores émises et reçues sont en réalité dirigées perpendiculairement à la surface supérieure du substrat 1, la représentation en oblique étant destinée à simplifier le dessin et faciliter l'explication, le principe de la mesure n'étant pas modifié.

En figure 3, l'onde émise par le transducteur 3 appliqué sur la surface du substrat 1, est représentée par la ligne L$_1$. Le contact étant assuré par une couche très mince 7 de gel, la partie de l'onde réfléchie par la face supérieure du substrat 1 est indétectable.

Comme les impédances acoustiques du substrat 1 et du revêtement 2 sont différentes, l'onde ultrasonore transmise à travers le substrat 1 est réfléchie à l'interface substrat 1 - revêtement 2 selon une ligne L$_2$.

L'onde ultrasonore qui retraverse le substrat selon la ligne L$_2$ est en partie transmise à l'extérieur selon la ligne L$_3$ et forme un « premier écho », et en partie réfléchie à l'interface substrat 1 - air et retraverse le substrat 1 selon la ligne L$_4$ pour être en partie à nouveau réfléchie selon la ligne L$_5$, à l'interface substrat 1 - revêtement 2. L'onde ultrasonore se propageant selon la ligne L$_5$ est en partie transmise à l'extérieur à travers l'interface substrat 1 - air selon la ligne L$_6$ et forme un « second écho ».

En figure 4, les impédances acoustiques du substrat 1 et du revêtement 2 sont peu différentes et l'onde émise par le transducteur 3 selon L$_1$' traverse le substrat 1 et le revêtement 2 et est réfléchie selon la ligne L$_2$' par l'interface revêtement 2 - air.

L'onde réfléchie selon la ligne L$_2$' est en partie transmise (« premier écho ») et en partie réfléchie selon les lignes L$_3$' et L$_4$', respectivement, comme précédemment décrit. L'onde réfléchie selon L$_4$' est à nouveau en partie réfléchie par l'interface revêtement 2 - air selon la ligne L$_5$'. Une partie de cette onde réfléchie est transmise selon la ligne L$_6$' à travers l'interface substrat 1 - air et forme le « second écho ».

Les lignes L$_2$, L$_4$, L$_5$ et L$_2$', L$_4$', L$_5$' traversant le substrat 1 ont la même longueur, si bien que les échos successifs parvenant au transducteur 3 par les lignes L$_3$, L$_6$ et L$_3$', L$_6$' sont séparés par des intervalles de temps égaux, correspondant respectivement à deux fois le temps de parcours des ultrasons à travers l'épaisseur x$_1$ du substrat 1, et à travers l'épaisseur x$_1$+x$_2$ du substrat 1 et du revêtement 2.

Le procédé selon l'invention consiste à mesurer les amplitudes des deux premiers échos successifs de l'onde émise par le transducteur 3, ces deux échos étant désignés par les références 8 et 9 sur le diagramme de la figure 5 qui représente l'évolution de l'amplitude des échos en fonction du temps.

On appelle facteur de qualité du revêtement, le rapport des amplitudes y$_1$ et y$_2$ des deux premiers échos.

Pour une pièce dont les impédances acoustiques du substrat et du revêtement sont peu différentes, c'est-à-dire pour une réflexion à l'interface revêtement 2 - air, le facteur de qualité du revêtement a pour expression :

$$Q = \frac{y_1}{y_2} = \frac{e^{2\alpha_1 x_1}}{r_{1cc}} \cdot \frac{e^{2\alpha_2 x_2}}{t_{12} t_{21}}$$

Pour une pièce dont les impédances acoustiques du substrat 1 et du revêtement 2 sont notablement différentes, c'est-à-dire pour une réflexion à l'interface substrat 1 - revêtement 2, le facteur de qualité du revêtement a pour expression :

$$Q' = \frac{y_1'}{y_2'} = \frac{e^{2\alpha_1 x_1}}{r_{1cc}} \cdot \frac{1}{r_{12}}$$

Dans ces expressions, $\alpha_1$ et $\alpha_2$ sont les coefficients d'atténuation des ondes ultrasonores dans le substrat 1 et dans le revêtement 2, respectivement, $t_{12}$ et $t_{21}$ sont les coefficients de transmission en amplitude du substrat 1 vers le revêtement 2 et du revêtement 2 vers le substrat 1, respectivement, et $r_{1cc}$ et $r_{12}$ sont les coefficients de réflexion en amplitude à l'interface substrat 1 - couche mince 7 et à l'interface substrat 1 - revêtement 2, respectivement.

Le facteur de qualité Q est composé d'un premier terme qui fait intervenir les propriétés du substrat 1, et d'un second terme qui fait intervenir la qualité structurale du revêtement 2 par la quantité $e^{2\alpha_2 x_2}$ et la qualité de sa liaison avec le substrat 1 par la quantité $t_{12} t_{21}$.

De même, le facteur de qualité Q' comprend un premier terme qui fait intervenir les propriétés du substrat 1, et un second terme qui fait intervenir la qualité de la liaison du revêtement 2 avec le substrat 1 par le coefficient $r_{12}$.

On a constaté que le coefficient de réflexion $r_{1cc}$ entre le substrat 1 et la couche mince 7 de gel est égal au coefficient de réflexion entre le substrat 1 et l'eau, que l'on peut déterminer expérimentalement. Cela permet de ne pas prendre en compte les propriétés de la matière utilisée pour former la couche mince 7, dans le calcul du facteur de qualité.

On établit une corrélation entre le facteur de qualité et l'adhérence du revêtement 2 au moyen de mesures mécaniques sur des éprouvettes d'étalonnage, qui sont réalisées de la façon suivante.

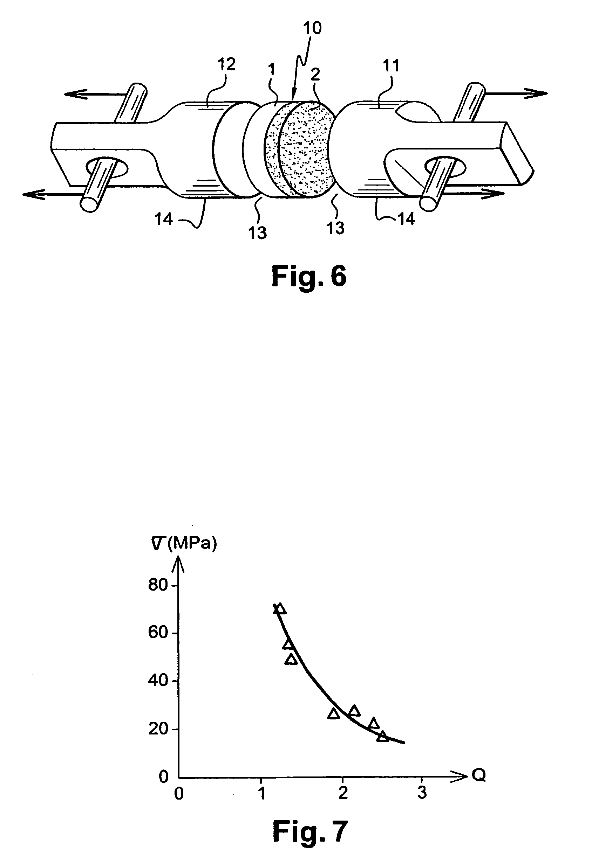

Ces éprouvettes sont des disques de même nature que les pièces à revêtir, ayant par exemple un diamètre d'un pouce (25,4 millimètres) et une épaisseur de six millimètres, qui sont placés à côté des pièces à revêtir et reçoivent le même revêtement 2 que ces pièces. Ensuite, comme représenté schématiquement en figure 6, chaque disque 10 est collé à deux contre-éprouvettes 11, 12 au moyen d'un adhésif 13 à haute résistance mécanique tel que le FM1000 de la société American Cyanamid. Les deux contre-éprouvettes sont fixées dans des mors ou têtes d'amarrage 14 d'une machine de traction. La vitesse de mise en charge du disque 10 est constante, par exemple de 0,8MPa/s, ce qui correspond à un déplacement de un millimètre par minute.

L'adhérence du revêtement 2 sur le substrat 1 est mesurée comme la force nécessaire pour le séparer du substrat 1. La contrainte à la rupture σ est le rapport de la force de traction maximale atteinte et de l'aire de la surface sur laquelle le revêtement 2 est déposé.

La figure 7 représente une courbe de variation de la contrainte de rupture σ en MPa en fonction du facteur de qualité Q mesuré à une fréquence de 5 MHz dans le cas d'un revêtement 2 de WC à 17% sur un substrat 1 de Z12C13. On voit que dans ce cas, le facteur de qualité Q augmente quand σ diminue.

Dans d'autres cas, tels par exemple que celui d'un revêtement de NiAl à 5% sur un substrat de Z12C13, le facteur de qualité Q' mesuré à une fréquence de 10 MHz varie dans le même sens que la contrainte à la rupture σ et augmente quand l'adhérence du revêtement 2 sur le substrat 1 est plus grande.

On peut donc, pour chaque type de revêtement 2 et de substrat 1, établir une courbe d'étalonnage de facteur de qualité Q ou Q' à partir d'essais de traction réalisés sur des éprouvettes, puis mesurer directement le facteur de qualité Q ou Q' sur des pièces revêtues, ce qui permet d'estimer la qualité de l'adhérence du revêtement 2 sur une pièce in situ en quelques minutes. On peut ainsi contrôler la qualité du revêtement 2, et aussi suivre son évolution dans le temps, les mesures du facteur de qualité pouvant être répétées à des intervalles de temps prédéterminés. La variabilité des mesures des facteurs de qualité est faible par rapport à celle des essais de traction et ces mesures représentent assez fidèlement l'adhérence du revêtement.

Par ailleurs, l'invention permet d'évaluer la qualité de l'adhérence d'un revêtement poreux et celle des revêtements qui ont des contraintes à la rupture supérieures à celle de l'adhésif utilisé pour le collage des éprouvettes dans les essais de traction.

## Revendications

**1.** Procédé de mesure de l'adhérence d'un revêtement (2) sur un substrat (1), consistant à émettre des ultrasons au moyen d'un transducteur (3) en direction du substrat (1) et du revêtement (2), à capter une succession d'échos résultant de réflexions des ultrasons sur les faces du substrat (1) et du revêtement (2) et à calculer un rapport d'amplitude de deux échos successifs, **caractérisé en ce que** la mesure est faite dans l'air et **en ce que** le procédé consiste également à appliquer le transducteur (3) sur le substrat (1) au moyen d'une couche mince (7) de gel, à calculer un facteur de qualité du revêtement donné par le rapport entre les amplitudes des échos associés aux deux premières réflexions sur l'interface substrat (1) - revêtement (2) après traversée du substrat (1) ou sur l'interface revêtement (2) - air après traversée du substrat (1) et du revêtement (2), et à déterminer l'adhérence du revêtement à partir d'une fonction de corrélation entre le facteur de qualité et la contrainte à la rupture du revêtement, obtenue au préalable par des essais mécaniques sur des éprouvettes d'étalonnage.

**2.** Procédé selon la revendication 1, **caractérisé en ce que** les ultrasons ont une fréquence de l'ordre de 5 à 10 MégaHertz.

**3.** Procédé selon l'une des revendications précédentes, **caractérisé en ce que** les mesures de facteur de qualité sont faites in situ sur des pièces revêtues.

**4.** Procédé selon la revendication 3, **caractérisé en ce qu**'il consiste à répéter les mesures sur les pièces à des intervalles de temps réguliers ou non pour suivre l'évolution de la qualité de l'adhérence du revêtement sur les pièces dans le temps.

**5.** Procédé selon l'une des revendications précédentes, **caractérisé en ce que** le revêtement (2) et le substrat (1) sont métalliques.

**6.** Procédé selon l'une des revendications précédentes, **caractérisé en ce que** la couche mince (7) de gel a une épaisseur d'environ 10μm.

**7.** Procédé selon l'une des revendications précédentes, **caractérisé en ce que** le facteur de qualité du revêtement (2) donné par le rapport entre les amplitudes des échos associés aux deux premières réflexions sur l'interface substrat (1) - revêtement (2) après traversée du substrat (1), a pour expression :

$$Q' = \frac{e^{2\alpha_1 x_1}}{r_{1cc}} \cdot \frac{1}{r_{12}}$$

dans laquelle $\alpha_1$ est le coefficient d'atténuation des ultrasons dans le substrat (1), $x_1$ est l'épaisseur du substrat (1), et $r_{1cc}$ et $r_{12}$ sont les coefficients de réflexion en amplitude à l'interface substrat (1) - couche mince (7) et à l'interface substrat (1) - revêtement (2), respectivement.

**8.** Procédé selon l'une des revendications 1 à 6, **caractérisé en ce que** le facteur de qualité du revêtement (2) donné par le rapport entre les amplitudes des échos associés aux deux premières réflexions sur l'interface revêtement (2) - air après traversée du substrat (1) et du revêtement (2), a pour expression :

$$Q = \frac{e^{2\alpha_1 x_1}}{r_{1cc}} \cdot \frac{e^{2\alpha_2 x_2}}{t_{12}t_{21}}$$

dans laquelle $\alpha_1$ et $\alpha_2$ sont les coefficients d'atténuation des ultrasons dans le substrat (1) et dans le revêtement (2), respectivement, $x_1$ et $x_2$ sont les épaisseurs du substrat (1) et du revêtement (2), respectivement, $t_{12}$ et $t_{21}$ sont les coefficients de transmission en amplitude du substrat (1) vers le revêtement (2) et du revêtement (2) vers le substrat (1), respectivement, et $r_{1cc}$ est le coefficient de réflexion en amplitude à l'interface substrat (1) - couche mince (7).

**Claims**

**1.** A method of measuring the adhesion of a coating (2) to a substrate (1), consisting in sending ultrasound waves by means of a transducer (3) toward the substrate (1) and the coating (2), picking up a series of echoes resulting from reflections of the ultrasound waves on the surfaces of the substrate (1) and of the coating (2), and calculating an amplitude ratio of two successive echoes, wherein the measurement is done in air and wherein the method also consists in applying the transducer (3) to the substrate (1) by means of a thin film (7) of gel, calculating a coating quality factor given by the ratio between the amplitudes of the echoes associated with the first two reflections on the substrate (1)/coating (2) interface after passing through the substrate (1) or on the coating (2) /air interface after passing through the substrate (1) and the coating (2), and in determining the adhesion of the coating from a correlation function between the quality factor and the breaking stress of the coating, obtained previously by mechanical tests on calibration test pieces.

**2.** The method as claimed in claim 1, wherein the ultrasound waves have a frequency of approximately 5 to 10 megahertz.

**3.** The method as claimed in one of the preceding claims, wherein the quality factor measurements are carried out in situ on coated parts.

**4.** The method as claimed in claim 3, which consists in repeating the measurements on the parts at regular or irregular time intervals to monitor the trend of the quality of the adhesion of the coating to the parts over time.

**5.** The method as claimed in one of the preceding claims, wherein the coating (2) and the substrate (1) are metallic.

**6.** The method as claimed in one of the preceding claims, wherein the thin film (7) of gel has a thickness of approximately 10 μm.

**7.** The method as claimed in one of the preceding claims, wherein the quality factor of the coating (2) given by the ratio between the amplitudes of the echoes associated with the first two reflections on the substrate (1)/coating (2) interface after passing through the substrate (1) is expressed as:

$$Q' = \frac{e^{2\alpha_1 x_1}}{r_{1cc}} \cdot \frac{1}{r_{12}}$$

in which $\alpha_1$ is the attenuation coefficient of the ultrasound waves in the substrate (1), $x_1$ is the thickness of the substrate (1), and $r_{1cc}$ and $r_{12}$ are amplitude reflection coefficients at the substrate (1)/thin film (7) interface and at the substrate (1)/coating (2) interface, respectively.

8. The method as claimed in one of claims 1 to 6, wherein the quality factor of the coating (2) given by the ratio between the amplitudes of the echoes associated with the first two reflections on the coating (2) /air interface after passing through the substrate (1) and the coating (2) is expressed as:

$$Q = \frac{e^{2\alpha_1 x_1}}{r_{1cc}} \cdot \frac{e^{2\alpha_2 x_2}}{t_{12} t_{21}}$$

in which $\alpha_1$ and $\alpha_2$ are the attenuation coefficients of the ultrasound waves in the substrate (1) and in the coating (2), respectively, $x_1$ and $x_2$ are the thicknesses of the substrate (1) and of the coating (2), respectively, $t_{12}$ and $t_{21}$ are the amplitude transmission coefficients from the substrate (1) to the coating (2) and from the coating (2) to the substrate (1), respectively, and $r_{1cc}$ is the amplitude-wise reflection coefficient at the substrate (1)/thin film (7) interface.

**Patentansprüche**

1. Verfahren zur Messung der Haftung einer Beschichtung (2) auf einem Substrat (1), das darin besteht, mittels eines Transducers (3) Ultraschallwellen in Richtung des Substrats (1) und der Beschichtung (2) abzugeben, eine Aufeinanderfolge von Echos aufzufangen, die durch Reflexionen der Ultraschallwellen auf den Flächen des Substrats (1) und der Beschichtung (2) entstehen, und ein Amplitudenverhältnis von zwei aufeinander folgenden Echos zu berechnen,
**dadurch gekennzeichnet,**
**dass** die Messung in der Luft erfolgt und dass das Verfahren ferner darin besteht, den Transducer (3) über eine dünne Schicht (7) von Gel auf das Substrat (1) aufzusetzen, einen Qualitätsfaktor der Beschichtung zu berechnen, der durch das Verhältnis zwischen den Amplituden der Echos gegeben ist, die mit den ersten beiden Reflexionen auf der Grenzfläche Substrat (1) - Beschichtung (2) nach Durchgang durch das Substrat (1) oder auf der Grenzfläche Beschichtung (2) - Luft nach Durchgang durch das Substrat (1) und die Beschichtung (2) verbunden sind, und die Haftung der Beschichtung aus einer Korrelationsfunktion zwischen dem Qualitätsfaktor und der Reißbelastung der Beschichtung zu bestimmen, die zuvor durch mechanische Versuche an Probestücken ermittelt wurde.

2. Verfahren nach Anspruch 1,
**dadurch gekennzeichnet,**
**dass** die Ultraschallwellen eine Frequenz in der Größenordnung von 5 bis 10 Megahertz haben.

3. Verfahren nach einem der vorherigen Ansprüche,
**dadurch gekennzeichnet,**
**dass** die Messungen des Qualitätsfaktors in situ an beschichteten Werkstücken vorgenommen werden.

4. Verfahren nach Anspruch 3,
**dadurch gekennzeichnet,**
**dass** es darin besteht, die Messungen an den Werkstücken in regelmäßigen oder nicht regelmäßigen Zeitabständen zu wiederholen, um die Entwicklung der Qualität der Haftung der Beschichtung an den Werkstücken in der Zeit zu verfolgen.

5. Verfahren nach einem der vorherigen Ansprüche,
**dadurch gekennzeichnet,**
**dass** die Beschichtung (2) und das Substrat (1) metallisch sind.

6. Verfahren nach einem der vorherigen Ansprüche,
**dadurch gekennzeichnet,**
**dass** die dünne Schicht (7) Gel eine Dicke von ca. 10 $\mu$m hat.

7. Verfahren nach einem der vorherigen Ansprüche,
**dadurch gekennzeichnet,**
**dass** der Qualitätsfaktor der Beschichtung (2), der durch das Verhältnis zwischen den Amplituden der Echos gegeben ist, die mit den ersten beiden Reflexionen auf der Grenzfläche Substrat (1) - Beschichtung (2) nach Durchgang durch das Substrat (1) verbunden sind, den folgenden Ausdruck hat:

$$Q' = \frac{e^{2\alpha_1 x_1}}{r_{1cc}} \cdot \frac{1}{r_{12}}$$

wobei $\alpha_1$ der Dämpfungskoeffizient der Ultraschallwellen in dem Substrat (1) ist, $x_1$ die Dicke des Substrats (1) ist und $r_{1cc}$ und $r_{12}$ die Amplituden-Reflexionskoeffizienten an der Grenzfläche Substrat (1) - dünne Schicht (7) bzw. an der Grenzfläche Substrat (1) - Beschichtung (2) sind.

8. Verfahren nach einem der vorherigen Ansprüche, **dadurch gekennzeichnet, dass** der Qualitätsfaktor der Beschichtung (2), der durch das Verhältnis zwischen den Amplituden der Echos gegeben ist, die mit den ersten beiden Reflexionen auf der Grenzfläche Beschichtung (2) - Luft nach Durchgang durch das Substrat (1) und die Beschichtung (2) verbunden sind, den folgenden Ausdruck hat:

$$Q' = \frac{e^{2\alpha_1 x_1}}{r_{1cc}} \cdot \frac{e^{2\alpha_2 x_2}}{t_{12}\, t_{21}}$$

wobei $\alpha_1$ und $\alpha_2$ die Dämpfungskoeffizienten der Ultraschallwellen in dem Substrat (1) bzw. in der Beschichtung (2) sind, $x_1$ und $x_2$ die Dicken des Substrats (1) bzw. der Beschichtung (2) sind, $t_{12}$ und $t_{21}$ die Amplituden-Übertragungskoeffizienten von dem Substrat (1) zu der Beschichtung (2) bzw. von der Beschichtung (2) zum Substrat (1) sind, und $r_{1cc}$ der Amplituden-Reflexionskoeffizient an der Grenzfläche Substrat (1)-dünne Schicht (7) ist.

**Fig. 1**

**Fig. 2**

**Fig. 3**

**Fig. 4**

**Fig. 5**

**Fig. 6**

**Fig. 7**

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1130391 A